# EUROPÄISCHE PATENTSCHRIFT

(11) **EP 1 985 360 B1**
(45) Veröffentlichungstag und Bekanntmachung des Hinweises auf die Patenterteilung: **17.07.2019**
(21) Anmeldenummer: 08004885.3
(22) Anmeldetag: 15.03.2008
(51) Int. Cl.: B01J 20/20, B01J 20/30, B01D 53/64, B01D 53/02, C01B 32/354

(54) **VERFAHREN ZUR HERSTELLUNG VON MIT ELEMENTARSCHWEFEL DOTIERTEN BRAUNKOHLENKOKS**
METHOD FOR MANUFACTURING BROWN COAL COKE DOPED WITH ELEMENTARY SULPHUR
PROCÉDÉ DE FABRICATION DE COKE DE LIGNITE DOTÉ AVEC DE SOUFRE ÉLÉMENTAIRE

(30) Priorität: 27.04.2007 DE 102007020421
(43) Veröffentlichungstag der Anmeldung: 29.10.2008
(73) Patentinhaber: RWE Power Aktiengesellschaft, 45128 Essen (DE)
(72) Erfinder: Heschel, Wolfgang, 09599 Freiberg (DE); Werner, Maik, 38642 Goslar (DE); Meyer, Bernd, 09566 Freiberg (DE); Wirling, Jürgen, 50354 Hürth (DE)
(74) Vertreter: KNH Patentanwälte Neumann Heine Taruttis PartG mbB

(56) Entgegenhaltungen:
- WO-A-99/02243
- DE-A1- 19 745 191
- GB-A- 2 122 916
- D. KARATZA, A. LANCIA, D. MUSMARRA, C. ZUCCHINI: "Study of mercury absorption and desorption on sulfur impregnated carbon" EXPERIMENTAL THERMAL AND FLUID SCIENCE, Bd. 21, Nr. 1-3, März 2000 (2000-03), Seiten 150-155, XP002491817

## Beschreibung

Die Erfindung betrifft ein Verfahren zur Herstellung von mit Elementarschwefel dotierten Braunkohlenkoks Adsorptionsmitteln, bei welchem Schwefel mit dem Braunkohlenkoks vermischt wird, die Mischung auf eine Temperatur zwischen 120 °C und 150 °C erhitzt wird und die Temperatur über einen Zeitraum zwischen 0,5 und 1 Stunde gehalten wird gemäß Anspruch 1.

Ein solches Verfahren ist beispielsweise aus der DE 32 29 396 bekannt. In der DE 32 29 396 wird vorgeschlagen, Aktivkohle mit einer Korngröße von etwa 3 mm mit Elementarschwefel zu vermischen und diese Mischung unter Einwirkung von Druck und Temperatur nachzubehandeln. Dabei erfolgt die Wärmebehandlung in einem geschlossenen Reaktionsraum derart, dass der in der Porenluft des Adsorptionsmittels enthaltene Sauerstoff zu CO₂ und CO reagiert. Im offenen System entweichen die Porenluft sowie die Desorptionsgase CO₂ und CO. Die in der DE 32 29 396 A1 beschriebenen Konditionierungsverfahren stellen eine Behandlung in einer sich während der Wärmebehandlung selbst einstellenden inerten Gasatmosphäre dar. Der Schwefel wird sowohl physikalisch adsorbiert, dass heißt durch Kapillarkondensation des Dampfs in den Poren abgeschieden, als auch chemisorbiert. Durch Chemisorption entstehen Kohlenstoff-Schwefel-Komplexe, in denen der Schwefel chemisch fest eingebunden ist und beispielsweise nicht mehr durch Lösungsmittel entfernt werden kann.

Das Verfahren nach DE 32 29 396 liefert ein mit Elementarschwefel imprägniertes, kohlenstoffhaltiges Adsorptionsmittel, welches hervorragend zur Entfernung von schädlichen oder sogar giftigen Stoffen aus Abgasen, insbesondere zur Entfernung von Quecksilber aus Abgasen, geeignet ist. Das Adsorptionsmittel wurde in vorteilhafter Art und Weise so behandelt, dass Elementarschwefel ausschließlich auf der inneren Oberfläche der Adsorptionsmittel adsorbiert vorliegt, wobei allerdings das gemäß DE 32 29 396 behandelte Adsorptionsmittel mit dem Nachteil behaftet ist, dass dieses nicht regenerierbar ist, in dem Sinne, dass das gebundene Quecksilber wieder freisetzbar ist, ohne das hierzu eine thermische Zersetzung der kohlenstoffhaltigen Adsorbentien erforderlich wäre.

Das Dokument DE 197 45 191 A1 offenbart ein Mittel, ein Verfahren zur Herstellung der Mittel und die Verwendung der Mittel zur Gasreinigung. Die Herstellung der Mittel geschieht durch Mischen eines feinpulvrigen Stoffs, wie beispielsweise Aktivkohle, mit Schwefel, vorzugsweise Schwefelblüte, und Erhitzen des Gemischs auf den Schmelzpunkt des Schwefels von 119°C oder höher. Dabei sind höhere Temperaturen als 200°C nicht erforderlich, wobei jedoch tiefere Temperaturen bevorzugt sind. Da der Schwefel an die feinpulvrigen Stoffe angesintert wird, ist eine thermische Behandlungszeit von wenigen Sekunden bei geringen Schwefelmengen bis 45 min bei hohen Gehalten ausreichend.

Das Dokument GB 2 122 916 A beschreibt ein Adsorptionsmittel und einen Prozess zum Entfernen von Quecksilber aus einem Abgasstrom. Das Adsorptionsmittel besteht dabei aus einer Aktivkohle, welche mit einem oder mehreren Stoffen aus einer der drei in dem Dokument genannten Gruppen und einem oder mehreren weiteren Stoffen aus einer der verbleibenden zwei Gruppen behandelt wird. Dabei wird die Aktivkohle mit den genannten Stoffen imprägniert oder besprüht und anschließend auf eine Temperatur zwischen 110°C und 400°C erhitzt. Die Erhitzung findet dabei unter Stickstoffgas, Kohlendioxidgas, Verbrennungsgas, Dampf, Luft oder sauerstoffhaltigen Gasen oder Mischungen daraus, statt.

Es sind Industrieprozesse bekannt, bei denen Abgase mit einer Quecksilberkonzentration anfallen, die eine Rückgewinnung wirtschaftlich erscheinen lassen. Beispielsweise bei der Rezyklierung quecksilberhaltiger Leuchtstoffröhren fallen quecksilberhaltige Abgase mit hoher Quecksilberkonzentration an. Nach der bisherigen Praxis werden die bei der Abgasreinigung eingesetzten quecksilberhaltigen Adsorbentien deponiert. Zudem sind diese Adsorbentien mit vergleichsweise wenig Quecksilber beladen und verursachen deshalb verhältnismäßig hohe Deponiekosten. Die anderen bekannten Verfahren zur Rückgewinnung des Quecksilbers aus den verwendeten Adsorbentien sind energetisch aufwändig und daher wirtschaftlich nicht sinnvoll.

Der Erfindung liegt daher die Aufgabe zu Grunde, ein Verfahren zur Herstellung von mit Elementarschwefel dotierten Braunkohlenkoks Adsorptionsmitteln bereitzustellen, welche mit verhältnismäßig geringem Aufwand wieder regenerierbar sind. Insbesondere soll eine kostengünstige Rückgewinnung des in den Adsorptionsmitteln enthaltenen Quecksilbers möglich sein.

Die Aufgabe wird gelöst durch ein Verfahren der eingangs genannten Art, welches sich dadurch auszeichnet, dass die Erhitzung der Mischung unter kontrollierter sauerstoffhaltiger Atmosphäre erfolgt.

Dabei hat sich überraschender Weise herausgestellt, dass die Oberflächenoxide der kohlenstoffhaltigen Adsorptionsmittel erhalten bleiben, da sich ein chemisches Gleichgewicht zwischen der Sauerstoffkonzentration in der Gasatmosphäre bei der Wärmebehandlung der Adsorptionsmittel und der Konzentration an Oberflächenoxiden auf der Kohlenstoffoberfläche einstellt. Ein so mit Schwefel imprägniertes Adsorptionsmittel hat die vorteilhafte Eigenschaft, dass das im Abgas enthaltene Quecksilber keine chemische Verbindung mit dem Schwefel eingeht, so dass die Quecksilberbildung reversibel bleibt. Dies lässt sich durch den Austausch des Sauerstoffs in bestimmten Oberflächenoxiden durch Schwefel erklären. Insbesondere wenn bei der Wärmebehandlung der Mischung eine Temperatur von 150 °C nicht überschritten wird, stellt sich die vorteilhafte Wirkung des so erhaltenen Adsorptionsmittels ein.

Der Sauerstoffgehalt der Gasatmosphäre wird bei der Mischung von Adsorptionsmittel und Schwefel auf einen Betrag zwischen 13 und 21 Vol.-% eingestellt. Besonders bevorzugt wird der Sauerstoffgehalt auf etwa 21 Vol.-% eingestellt, was dem Luftsauerstoffgehalt entspricht. Bei der Durchführung des Verfahrens ist darauf zu achten, dass der Sauerstoffgehalt in dem eingestelltem Bereich gehalten wird, so dass keine Innertisierung der Atmosphäre sowie eine hieraus resultierende Selbsterwärmung der Mischung eintritt.

Zweckmäßigerweise erfolgt die thermische Behandlung der Mischung über eine Zeitdauer von etwa einer Stunde.

Braunkohlenkoks wird als kohlenstoffhaltiges Adsorptionsmittel bei dem erfindungsgemäßen Verfahren verwendet, wobei der Braunkohlenkoks nach dem Salem-Lurgi-Herdofen-Verfahren erhalten wurde.

Besonders vorteilhaft ist es, wenn als kohlenstoffhaltiges Adsorptionsmittel Braunkohlenkoks Anwendung findet, der bei seiner Herstellung einer Oberflächenoxidation in feuchter, sauerstoffhaltiger Atmosphäre unterzogen wurde. Die Anwesenheit von Oberflächenoxiden, die auch ohne eine solche Behandlung auf der Koksoberfläche vorhanden sind, ist Voraussetzung, dass es zu der erfindungsgemäßen Wirksamkeit des nach dem vorstehend beschriebenen Verfahren imprägnierten Aktivkokses kommt.

Weiterhin wird ein Verfahren zur Abgasreinigung unter Verwendung von mit Elementarschwefel dotierten Braunkohlenkoks Adsorptionsmitteln beschrieben, die nach dem vorstehend Verfahren erhalten wurden, bei welchem eine wechselweise Adsorption und Desorption von Quecksilber aus dem Abgasstrom, vorzugsweise mittels eines Festbettadsorbers

erfolgt. Hierzu können beispielsweise mehrere Festbettadsorber hintereinander geschaltet sein. Alternativ kann ein als Rotoradsorber ausgebildeter Festbettadsorber Anwendung finden.

Bevorzugt wird das bei der Desorption des Quecksilbers erhaltene Desorbatgas zwecks Kondensation und Rückgewinnung des in diesem enthaltenen Quecksilbers abgekühlt.

Die Adsorption des Quecksilbers erfolgt vorzugsweise bei einer Abgastemperatur von 60°C bis 120 °C, bevorzugt bei einer Abgastemperatur von etwa 60 °C bis 90°C.

Die Desorption des Quecksilbers kann bei einer Abgastemperatur von 150 °C bis 200°C, bevorzugt bei etwa 150 °C durchgeführt werden.

Bei den mit Elementarschwefel gemäß der Erfindung dotierten Braunkohlenkoks Adsorptionsmitteln hat sich überraschenderweise gezeigt, dass der Schwefel nach der in einer sauerstoffhaltigen Atmosphäre durchgeführten thermischen Behandlung einer Probe überwiegend keine irreversible chemische Verbindung mit dem Quecksilber eingeht, in folge dessen Quecksilber bei Erwärmung bis zur Behandlungstemperatur oder wenig darüber wieder freigesetzt werden kann.

Beispiele zur Veranschaulichung der Wirkungsweise eines erfindungsgemäß mit Elementarschwefel dotierten kohlenstoffhaltigen Adsorptionsmittels werden nachstehend erläutert, wobei das Beispiel 1 die Wirkungsweise einer nach dem Stand der Technik mit Schwefel imprägnierten Aktivkohle belegt, das Beispiel 2 im Vergleich hierzu die Wirkungsweise eines nach dem erfindungsgemäßen Verfahren dotierten Braunkohlenkoks Adsorptionsmittels belegt und das Beispiel 3 die Wiederverwendbarkeit eines erfindungsgemäß dotieren Braunkohlenkoks Adsorptionsmittels nach dessen einmaliger Verwendung zur Abgasreinigung belegt.

### Beispiel 1 (nicht erfindungsgemäß)

Kommerzielle mit mindestens 10 Massenprozent Schwefel imprägnierte Aktivkohle mit dem Markennamen Desorex HGD 4 S (Donau Carbon GmbH Frankfurt/M) wurde mit elementarem Quecksilber aus einem Modellgasstrom unter folgenden Messbedingungen beladen: Hg-Eintrittskonzentration 980 µg/m³; Adsorptionstemperatur 120 °C; Desorptionstemperatur 150 °C; Leerraumgasgeschwindigkeit 1,85 cm/s; Trägergas mit 14 Vol.-% Sauerstoff, 0,4 Vol.-% Wasserdampf, Rest Stickstoff. Die Adsorptionszeit betrug 19 Stunden. Desorbiert wurde mit dem Hg-haltigen Gasstrom (Rohgasdesorption) über eine Zeitdauer von 3,5 Stunden.

Die staubfein zerkleinerte Probe mit einem d₅₀-Wert von 20 µm wurde in Form von 3 Einzelschichten zu je 0,5 g, getrennt durch Glaswollefilze, in den Adsorber eingebaut. Der Sandwich-Aufbau der Adsorptionsschicht gewährleistet eine gleichmäßige Durchströmung der pulverförmigen Probe. Die Hg-Konzentration nach Adsorber wurde kontinuierlich gemessen.

Nach einer Adsorptionsdauer von 19 Stunden hatte die Aktivkohle eine Hg-Beladung von 383 µg/g (0,0383 Masseprozent) erreicht.

Nach der Desorption über 3,5 Stunden bei 150 °C stellte sich eine Beladung von 408 µg/g (0,04 Masseprozent) ein, d.h. es ist auch bei der erhöhten Temperatur zu einer weiteren Adsorption von elementaren Quecksilber gekommen, erkennbar daran, dass die Austrittskonzentration mit 600 µg/m³ unterhalb der Eintrittskonzentration von 980 µg/m³ lag.

Aus dem Ergebnis ist zu schlussfolgern, dass von der kommerziellen Aktivkohle auch bei der erhöhten Temperatur noch elementares Quecksilber aufgenommen wird und folglich eine Desorption mit vertretbarem Energieaufwand (Desorptionstemperatur) nicht möglich ist.

### Beispiel 2

Schwefelgranulat wurde in der Scheibenschwingmühle bis zu einem d₅₀-Wert von 7 µm zerkleinert. Es wurden 5 Gewichtsteile des Schwefelstaubes mit 95 Gewichtsteilen Braunkohlenkoksstaub (HOK Super, RWE Power AG, d₅₀-Wert 20 µm) in einem Überkopfmischer homogen vermischt. Der Schwefelgehalt der dotierten Koksprobe betrug 5 Massenprozent. Die Koksprobe wurde anschließend über eine Stunde lang unter Luftzutritt einer Temperatur von 150 °C ausgesetzt. Die abgekühlte Probe wurde in Form von 3 Einzelschichten zu je 0,5 g, getrennt durch Glaswollefilze, in den Adsorber eingebaut. Die Adsorptions- sowie Desorptionsbedingungen entsprachen exakt denjenigen von Beispiel 1.

Nach einer Adsorptionsdauer von 19 Stunden hatte die erfindungsgemäße Probe eine Hg-Beladung von 153 µg/g (0,015 Masseprozent) erreicht.

Nach der Desorption über 3,5 Stunden bei 150 °C stellte sich eine Beladung von 100 µg/g (0,01 Masseprozent) ein. Während der Desorptionsphase stieg die Hg-Konzentration im Desorptionsgas nach Adsorber kurzzeitig auf 3000 µg/m³ an. Im Mittel wurde über den Desorptionszeitraum von 3,5 Stunden eine Hg-Konzentration von 1750 µg/m³ im Desorptionsgas gemessen, was einer Anreicherung auf das 1,8-fache, bezogen auf die Eintrittskonzentration, entspricht. Mit zunehmender Desorptionsdauer sank die Austrittskonzentration ab.

### Beispiel 3

Die desorbierte Koksprobe nach Beispiel 2 wurde erneut mit Quecksilber beladen und anschließend ein zweites Mal desorbiert. Die Bedingungen waren: Hg-Eintrittskonzentration 980 µg/m³; Adsorptionstemperatur 60 °C; Desorptionstemperatur 150 °C; Leerraumgasgeschwindigkeit 1,56 cm/s; Trägergas mit 14 Vol.-% Sauerstoff, 0,4 Vol.-% Wasserdampf, Rest Stickstoff. Die Adsorptionszeit betrug 19 Stunden. Desorbiert wurde mit dem Hg-haltigen Gasstrom (Rohgasdesorption) über eine Zeitdauer von 3,5 Stunden.

Nach einer Adsorptionsdauer von 19 Stunden hatte die erfindungsgemäße Probe eine Hg-Beladung von 403 µg/g (0,04 Masseprozent) erreicht.

Nach der Desorption über 3,5 Stunden bei 150 °C stellte sich eine Beladung von 250 µg/g (0,025 Masseprozent) ein. Während der Desorptionsphase stieg die Hg-Konzentration nach Adsorber kurzzeitig auf über 3000 µg/m³ an. Im Mittel wurde über den Desorptionszeitraum von 3,5 Stunden eine Hg-Konzentration von 2000 µg/m³ im Desorbatgas gemessen, was einer Anreicherung auf das 2-fache, bezogen auf die Eintrittskonzentration, entspricht. Mit zunehmender Desorptionsdauer sank die Austrittskonzentration ab.

In den weiteren Zyklen schwankte die Beladung bei 60 °C um einen Wert von 400 µg/g. Die desorbierte Hg-Menge blieb mit ca. 30 % der aufgenommenen Hg-Menge ebenfalls konstant.

Das Ergebnis dokumentiert, dass durch Temperaturerhöhung auf (nur) 150 °C und mit dem Hg-haltigen Rohgas als Desorptionsmedium ca. 30 % der Hg-Menge desorbiert werden (sogen. Beladungsspiel).

## Patentansprüche

1. Verfahren zur Herstellung von mit Elementarschwefel dotierten Braunkohlenkoks, wobei der Elementarschwefel überwiegend keine irreversible chemische Bindung mit Quecksilber eingeht,
bei welchem Verfahren Schwefel mit dem Braunkohlenkoks vermischt wird, die Mischung auf eine Temperatur zwischen 120°C und 150 °C erhitzt wird und die Temperatur über einen Zeitraum zwischen 0,5 und 1 Stunde gehalten wird, **dadurch gekennzeichnet, dass** die Erhitzung der Mischung unter kontrollierter sauerstoffhaltiger Atmosphäre erfolgt, wobei der Sauerstoffgehalt auf einen Betrag zwischen 13 und 21 Vol.-% eingestellt wird und in dem eingestellten Bereich gehalten wird.

2. Verfahren nach Anspruch 1, **dadurch gekennzeichnet, dass** die thermische Behandlung der Mischung über eine Zeitdauer von etwa einer Stunde erfolgt.

3. Verfahren nach einem der Ansprüche 1 bis 2, **dadurch gekennzeichnet, dass** als kohlenstoffhaltige Adsorptionsmittel Braunkohlenkoks Anwendung findet, der bei seiner Herstellung einer Oberflächenoxidation in feuchter, sauerstoffhaltiger Atmosphäre unterzogen wurde.

## Claims

1. Method for the preparation of lignite coke doped with elemental sulphur, wherein the elemental sulphur predominantly does not form an irreversible chemical bond with mercury, in which method sulphur is mixed with the lignite coke, the mixture is heated to a temperature between 120°C and 150°C and the temperature is maintained for a period between 0.5 and 1 hour, **characterized in that** the heating of the mixture takes place under a controlled oxygen-containing atmosphere, wherein the oxygen content is adjusted to an amount between 13 and 21 vol% and maintained within the adjusted range.

2. Process according to claim 1, **characterized in that** the thermal treatment of the mixture takes place over a period of about one hour.

3. Process according to any of claims 1 to 2, **characterized in that** the carbon-containing adsorbent used is lignite coke which has been subjected to surface oxidation in a moist, oxygen-containing atmosphere during its production.

## Revendications

1. Procédé de préparation de coke de lignite dopé au soufre élémentaire, le soufre élémentaire ne formant essentiellement aucune liaison chimique irréversible avec le mercure,
procédé dans lequel le soufre est mélangé avec le coke de lignite, le mélange étant chauffé à une température comprise entre 120 et 150 °C, et la température étant maintenue pendant une durée comprise entre 0,5 et 1 heure, **caractérisé en ce que** le chauffage du mélange est effectué sous atmosphère contrôlée contenant de l'oxygène, la teneur en oxygène étant réglée à une valeur entre 13 et 21 % en volume et étant maintenue dans la plage indiquée.

2. Procédé selon la revendication 1, **caractérisé en ce que** le traitement thermique du mélange s'effectue pendant environ une heure.

3. Procédé selon l'une des revendications 1 à 2, **caractérisé en ce que** l'adsorbant carboné utilisé est du coke de lignite qui, pendant sa préparation, a été soumis à une oxydation de surface dans une atmosphère humide contenant de l'oxygène.
